# EUROPEAN PATENT APPLICATION

(11) **EP 4 730 591 A1**
(43) Date of publication of application: **22.04.2026**
(21) Application number: 23950464.0
(22) Date of filing: 14.11.2023
(51) Int. Cl.: H02J 7/00, H02J 9/06, B60R 16/03, B60L 3/00

(54) **POWER SUPPLY CONTROL CIRCUIT, AND POWER SUPPLY CONTROL METHOD AND DEVICE**

(30) Priority: 28.08.2023 CN 202311087290
(71) Applicant: Contemporary Amperex Technology Co., Limited, Ningde, Fujian 352100 (CN)
(72) Inventor: WU, Kai, Ningde, Fujian 352100 (CN); XIA, Zhangle, Ningde, Fujian 352100 (CN); LI, Weiqiang, Ningde, Fujian 352100 (CN); LUO, Huixiu, Ningde, Fujian 352100 (CN)
(74) Representative: Kraus & Lederer PartGmbB
(86) International application number: PCT/CN2023/131630
(87) International publication number: WO 2025/043892

(57) **Abstract**

This application discloses a power supply control circuit, a power supply control method, and an apparatus. The power supply control circuit includes a first power module, a second power module, and a switch module; where the first power module is connected to an electric module; the second power module is connected to the electric module through the switch module; in a case that a voltage of the first power module is greater than or equal to a threshold voltage, the switch module is turned off, and the first power module is configured to supply power to the electric module; and in a case that the voltage of the first power module is less than the threshold voltage, the switch module is turned on, and the second power module is configured to supply power to the electric module. According to embodiments of this application, power supply reliability can be improved.

## Description

### CROSS-REFERENCE TO RELATED APPLICATIONS

This application claims priority to Chinese Patent Application No. 202311087290.3, filed on August 28, 2023 and entitled "POWER SUPPLY CONTROL CIRCUIT, POWER SUPPLY CONTROL METHOD, AND APPARATUS", which is incorporated herein by reference in its entirety.

### TECHNICAL FIELD

This application relates to the field of power supply control technology, and in particular, to a power supply control circuit, a power supply control method, and an apparatus.

### BACKGROUND

With the rapid development of social economy and continuous progress in automotive technology, the number of vehicles has been increasing, and vehicles have gradually become indispensable means of transportation in people's daily lives. A storage battery, as a power source, can supply power to electric modules in a vehicle and is an essential component of the vehicle.

However, in the case of an abnormality in the power source, the electric module may experience power loss, causing electrical components unable to continue functioning.

### SUMMARY

This application provides a power supply control circuit, a power supply control method, and an apparatus, to improve power supply reliability.

According to a first aspect, this application provides a power supply control circuit including: a first power module, a second power module, and a switch module; where the first power module is connected to an electric module; the second power module is connected to the electric module through the switch module; in a case that a voltage of the first power module is greater than or equal to a threshold voltage, the switch module is turned off, and the first power module is configured to supply power to the electric module; and in a case that the voltage of the first power module is less than the threshold voltage, the switch module is turned on, and the second power module is configured to supply power to the electric module.

**In** a possible implementation of the first aspect, the second power module is connected to the first power module, and the second power module is further configured to receive and store electric energy from the first power module.

**In** a possible implementation of the first aspect, the second power module includes an energy storage control submodule and an energy storage submodule, where the energy storage control submodule is connected to the first power module and the energy storage submodule, and the energy storage submodule is connected to the switch module;
the energy storage control submodule is configured to control the energy storage submodule to receive and store electric energy from the first power module; and
the energy storage submodule is configured to store electric energy in a case that the switch module is turned off, and release electric energy to the electric module in a case that the switch module is turned on.

**In** a possible implementation of the first aspect, the energy storage control submodule includes an inductor, a first switch, and a first diode, and the energy storage submodule includes a capacitor;
a first terminal of the inductor is connected to the first power module, and a second terminal of the inductor is connected to a first terminal of the first switch and a positive electrode of the first diode;
a second terminal of the first switch is grounded, and a control terminal of the first switch receives a pulse width modulation signal;
a negative electrode of the first diode is connected to a first electrode of the capacitor; and
the first electrode of the capacitor is connected to the switch module, and a second electrode of the capacitor is grounded.

In a possible implementation of the first aspect, the power supply control circuit further includes a voltage detection module, where the voltage detection module is connected to the first power module and the switch module, the voltage detection module is configured to: detect the voltage of the first power module, and in a case that the voltage of the first power module is greater than or equal to the threshold voltage, control the switch module to turn off; or in a case that the voltage of the first power module is less than the threshold voltage, control the switch module to turn on.

In a possible implementation of the first aspect, the voltage detection module includes a comparator, where a first input terminal of the comparator is connected to the first power module, a second input terminal of the comparator is connected to a reference power source, and an output terminal of the comparator is connected to a control terminal of the switch module; and
the comparator is configured to: in a case that a voltage at the first input terminal is less than a voltage at the second input terminal, control the switch module to turn on; and in a case that the voltage at the first input terminal is greater than or equal to the voltage at the second input terminal, control the switch module to turn off.

In a possible implementation of the first aspect, the first input terminal is an inverting input terminal of the comparator, and the second input terminal is a non-inverting input terminal of the comparator;
or the first input terminal is a non-inverting input terminal of the comparator, and the second input terminal is an inverting input terminal of the comparator.

In a possible implementation of the first aspect, the voltage detection module further includes:
a first voltage divider submodule, where a first terminal of the first voltage divider submodule is connected to the first power module, a second terminal of the first voltage divider submodule is grounded, a third terminal of the first voltage divider submodule is connected to the first input terminal, and a voltage at the third terminal of the first voltage divider submodule is between a voltage at the first terminal of the first voltage divider submodule and a voltage at the second terminal of the first voltage divider submodule.

In a possible implementation of the first aspect, the voltage detection module further includes: a second voltage divider submodule, where a first terminal of the second voltage divider submodule is connected to the reference power source, a second terminal of the second voltage divider submodule is grounded, a third terminal of the second voltage divider submodule is connected to the second input terminal, and a voltage at the third terminal of the second voltage divider submodule is between a voltage at the first terminal of the second voltage divider submodule and a voltage at the second terminal of the second voltage divider submodule.

In a possible implementation of the first aspect, the voltage detection module further includes: a voltage stabilization submodule, where the voltage stabilization submodule is connected to the output terminal of the comparator and the control terminal of the switch module, and the voltage stabilization submodule is configured to initialize a voltage at the control terminal of the switch module.

In a possible implementation of the first aspect, the first voltage divider submodule includes a first resistor and a second resistor, where a first terminal of the first resistor is connected to the first power module, a second terminal of the first resistor is connected to a first terminal of the second resistor and the first input terminal, and a second terminal of the second resistor is grounded.

In a possible implementation of the first aspect, the second voltage divider submodule includes a third resistor and a fourth resistor, where a first terminal of the third resistor is connected to the reference power source, a second terminal of the third resistor is connected to a first terminal of the fourth resistor and the second input terminal, and a second terminal of the fourth resistor is grounded.

In a possible implementation of the first aspect, the initialization submodule includes a fifth resistor, where a first terminal of the fifth resistor is connected to the output terminal of the comparator and the control terminal of the switch module, and a second terminal of the fifth resistor is grounded.

In a possible implementation of the first aspect, the power supply control circuit further includes:
a first unidirectional conduction module, where the first power module is connected to the electric module through the first unidirectional conduction module;
and/or a second unidirectional conduction module, where the second power module is connected to the electric module through the second unidirectional conduction module.

In a possible implementation of the first aspect, the first unidirectional conduction module includes a second diode, where a positive electrode of the second diode is connected to the first power module, and a negative electrode of the second diode is connected to the electric module;
and/or the second unidirectional conduction module includes a third diode, where a positive electrode of the third diode is connected to the second power module, and a negative electrode of the third diode is connected to the switch module.

Based on the same inventive concept, according to a second aspect, an embodiment of this application provides an apparatus including an electric module and the power supply control circuit according to any one of the embodiments of the first aspect.

Based on the same inventive concept, according to a third aspect, an embodiment of this application provides a power supply control method, including: in a case that a voltage of a first power module is greater than or equal to a threshold voltage, controlling the first power module to supply power to an electric module; and in a case that the voltage of the first power module is less than the threshold voltage, controlling a second power module to supply power to the electric module.

In a possible implementation of the first aspect, the method further includes:
detecting the voltage of the first power module, and comparing a magnitude relationship between the voltage of the first power module and the threshold voltage.

In the embodiments of this application, with arrangement of the second power module and the switch module, the second power module is connected to the electric module through the switch module, and in a case that the voltage of the first power module is less than the threshold voltage, the second power module can be activated to supply power to the electric module. This ensures that the electric module continues to operate in the event of a disconnection or voltage drop of the first power module, thereby improving power supply reliability.

The above description is only an overview of the technical solutions of this application. For a clearer understanding of the technical means of this application, implementation can be carried out in accordance with the content of the specification. Moreover, to make the above and other objectives, features, and advantages of this application more comprehensible, specific implementations of this application are exemplified below.

### BRIEF DESCRIPTION OF DRAWINGS

The features, advantages, and technical effects of example embodiments of this application are described below with reference to the accompanying drawings.
FIG. 1 is a schematic structural diagram of a power supply control circuit according to an embodiment of this application;
FIG. 2 is a schematic structural diagram of a power supply control circuit according to another embodiment of this application;
FIG. 3 is a schematic structural diagram of a power supply control circuit according to still another embodiment of this application;
FIG. 4 is a schematic structural diagram of a power supply control circuit according to still another embodiment of this application;
FIG. 5 is a schematic structural diagram of a power supply control circuit according to still another embodiment of this application;
FIG. 6 is a schematic structural diagram of a power supply control circuit according to still another embodiment of this application;
FIG. 7 is a schematic structural diagram of a power supply control circuit according to still another embodiment of this application;
FIG. 8 is a schematic structural diagram of a power supply control circuit according to still another embodiment of this application;
FIG. 9 is a schematic structural diagram of a power supply control circuit according to still another embodiment of this application;
FIG. 10 is a schematic structural diagram of a power supply control circuit according to still another embodiment of this application;
FIG. 11 is a schematic structural diagram of a power supply control circuit according to still another embodiment of this application;
FIG. 12 is a schematic structural diagram of modules of an apparatus according to an embodiment of this application;
FIG. 13 is a schematic flowchart of a power supply control method according to an embodiment of this application; and
FIG. 14 is a schematic flowchart of a power supply control method according to another embodiment of this application.

In the drawings, the drawings are not necessarily drawn to scale.

Description of reference signs:
10. power supply control circuit;
11. first power module;
12. second power module; 121. energy storage control submodule; 122. energy storage submodule;
13. switch module;
14. voltage detection module; 141. first voltage divider submodule; 142. second voltage divider submodule; 143. initialization submodule;
151. first unidirectional conduction module; 152. second unidirectional conduction module;
100. apparatus.

### DESCRIPTION OF EMBODIMENTS

To make the objectives, technical solutions, and advantages of the embodiments of this application clearer, the following clearly and completely describes the technical solutions in the embodiments of this application with reference to the accompanying drawings in the embodiments of this application. Apparently, the described embodiments are merely some but not all of the embodiments of this application. All other embodiments obtained by a person of ordinary skill in the art based on the embodiments of this application without creative efforts shall fall within the protection scope of this application.

Unless otherwise defined, all technical and scientific terms used in this application have the same meaning as commonly understood by those skilled in the technical field of this application; the terms used in the specification of this application are only for the purpose of describing specific embodiments and are not intended to limit this application; the terms "including" and "having" and any variations thereof in the specification, claims, and the above description of the drawings of this application are intended to cover non-exclusive inclusion.

The terms "first", "second", and the like in the specification, claims, or the above description of the drawings of this application are used to distinguish different objects and not to describe a specific order or priority.

In the description of the embodiments of this application, the term "and/or" merely describes an association relationship between associated objects, indicating that three relationships may exist, for example, A and/or B may indicate: A exists alone, A and B exist simultaneously, and B exists alone. In addition, the character "/" herein generally indicates an "or" relationship between the associated objects.

In the description of this application, it should be noted that, unless otherwise explicitly specified and limited, the terms "installed", "connected", "connection", and "attached" should be understood in a broad sense, for example, it may be a fixed connection, a detachable connection, or an integral connection; it may be a direct connection, an indirect connection through an intermediate medium, or an internal communication between two components. For those of ordinary skill in the art, the specific meanings of the above terms in this application can be understood according to specific circumstances.

As described in the background, in the case of an abnormality in a power source, an electric module may experience power loss, causing electric components unable to continue functioning.

For example, the power source may include a lead-acid battery. The lead-acid battery may be connected to a system basic chip (System Basic Chip, SBC), and the SBC is connected to a microcontroller unit (Microcontroller Unit, MCU). The lead-acid battery may supply power to the MCU through the SBC, and the MCU may be configured to control states of an active fuse, an airbag, and the like.

However, in the event of a vehicle collision, the lead-acid power line may be disconnected. In this case, the SBC/MCU may loss power, and some actions that have not yet been executed are interrupted due to the power loss, such as the deployment of an airbag or the disconnection of an active fuse in the main circuit of a battery pack (pack).

Additionally, during an electromagnetic compatibility (Electromagnetic Compatibility, EMC) voltage drop test, the power source voltage may drop below the normal operating voltage of the electric module, leading to test failure.

To address the above technical problems, embodiments of this application provide a power supply control circuit, a power supply control method, and an apparatus. The following details the power supply control circuit, power supply control method, and apparatus provided in the embodiments of this application with reference to the accompanying drawings.

The following first describes the power supply control circuit provided in the embodiments of this application.

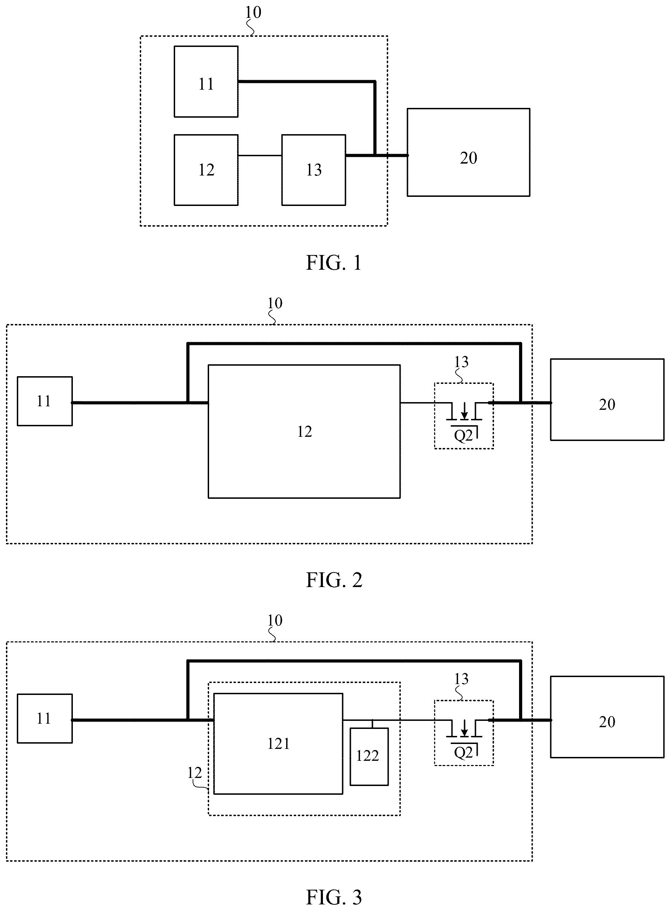

FIG. 1 is a schematic structural diagram of a power supply control circuit according to an embodiment of this application. As shown in FIG. 1, the power supply control circuit 10 may include a first power module 11, a second power module 12, and a switch module 13.

The first power module 11 is connected to an electric module 20. The second power module 12 is connected to the electric module 20 through the switch module 13. In a case that a voltage of the first power module 11 is greater than or equal to a threshold voltage, the switch module 13 is turned off, and the first power module 11 is configured to supply power to the electric module 20; and in a case that the voltage of the first power module 11 is less than the threshold voltage, the switch module 13 is turned on, and the second power module 12 is configured to supply power to the electric module 20.

It can be understood that the first power module 11 is a primary power module. In a case that the voltage of the first power module 11 is greater than or equal to the threshold voltage, the first power module 11 can be used to continuously supply power to the electric module 20. The second power module 12 is a backup power module, and the second power module 12 is activated to supply power to the electric module 20 only in a case that the voltage of the first power module 11 is less than the threshold voltage. This ensures that the electric module 20 continues to operate in the event of a disconnection or voltage drop of the first power module 11.

For example, the first power module 11 may include a storage battery of the apparatus. For example, the first power module 11 may include a KL30 power source. The second power module 12 may store and release electric energy. The threshold voltage can be set according to an actual requirement, for example, the threshold voltage may be 7 V.

The switch module 13 may perform an on or off action. The switch module 13 may include a transistor, a triode, a relay, or other types of switches.

For example, the electric module 20 may include an SBC, an MCU, or the like.

According to the power supply control circuit 10 provided in the embodiments of this application, with provision of the second power module 12 and the switch module 13, the second power module 12 is connected to the electric module 20 through the switch module 13, and in a case that the voltage of the first power module 11 is less than the threshold voltage, the second power module 12 can be activated to supply power to the electric module 20. This ensures that the electric module 20 continues to operate in the event of a disconnection or voltage drop of the first power module 11, thereby improving power supply reliability.

For example, in the event of a vehicle collision, when the first power module 11 is disconnected or experiences a voltage drop, since the second power module 12 supplies power to the electric module 20, it can be ensured that the electric module 20 continues to operate. Therefore, the disconnection of an active fuse in the main circuit, the deployment of an airbag, and the like can still be implemented.

In some optional embodiments, as shown in FIG. 2, the second power module 12 may be connected to the first power module 11, and the second power module 12 may be further configured to receive and store electric energy from the first power module 11. In this way, the electric energy stored by the second power module 12 may come from the first power module 11, eliminating the need to introduce an additional power source, which helps simplify the structure and reduce costs.

For example, when the first power module 11 is used for power-on, the second power module 12 may receive and store electric energy from the first power module 11 to ensure that the second power module 12 has sufficient electric energy to meet the operating needs of the electric module 20 in the event of a disconnection or voltage drop of the first power module 11.

In some optional embodiments, as shown in FIG. 3, the second power module 12 may include an energy storage control submodule 121 and an energy storage submodule 122, where the energy storage control submodule 121 is connected to the first power module 11 and the energy storage submodule 122, and the energy storage submodule 122 is connected to the switch module 13. The energy storage control submodule 121 is configured to control the energy storage submodule 122 to receive and store electric energy from the first power module 11. The energy storage submodule 122 is configured to store electric energy in a case that the switch module 13 is turned off, and release electric energy to the electric module 20 in a case that the switch module 13 is turned on. According to the embodiments of this application, through the control of the energy storage control submodule 121 and the storage and release of electric energy by the energy storage submodule 122, electric energy from the first power module 11 can be stored, and power can be supplied to the electric module 20 in a case that the switch module 13 is turned on.

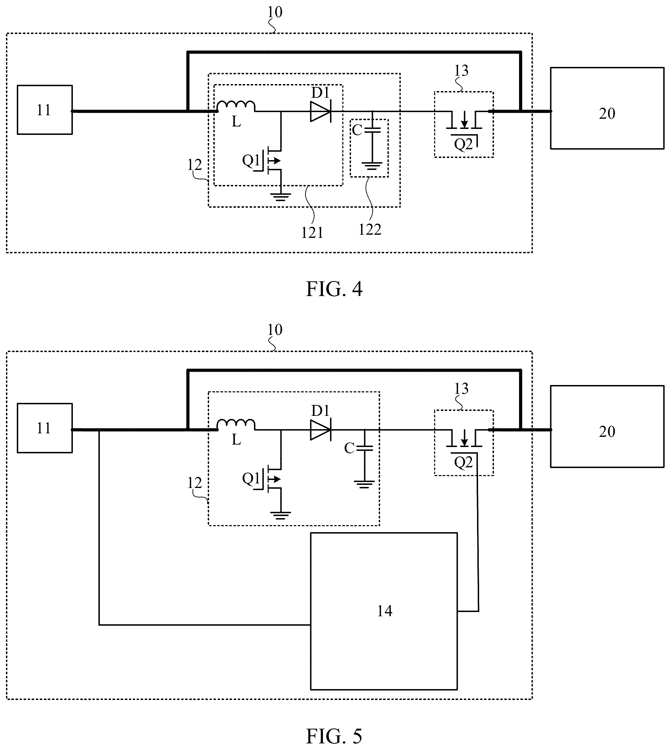

In some optional embodiments, as shown in FIG. 4, the energy storage control submodule 121 may include an inductor L, a first switch Q1, and a first diode D1, and the energy storage submodule 122 may include a capacitor C.

A first terminal of the inductor L is connected to the first power module 11, a second terminal of the inductor L is connected to a first terminal of the first switch Q1 and a positive electrode of the first diode D1; a second terminal of the first switch Q1 is grounded, and a control terminal of the first switch Q1 receives a pulse width modulation (Pulse Width Modulation, PWM) signal; a negative electrode of the first diode D1 is connected to a first electrode of the capacitor C; and the first electrode of the capacitor C is connected to the switch module 13, and a second electrode of the capacitor C is grounded. The first switch Q1 may include a transistor.

The first switch Q1 can be controlled to alternately turn on and off, such that the inductor L, the first switch Q1, the first diode D1, and the capacitor C can form a BOOST boost circuit.

The first power module 11 may be a direct current power source, the first terminal of the inductor L is connected to the first power module 11, and the inductor L receives direct current power. In a case that the first switch Q1 is turned on, the first switch Q1 is equivalent to a wire, and current flows through the inductor L and the first switch Q1 to ground. Since the input is direct current power, the current through the inductor L increases linearly at a certain rate. As the current through the inductor L increases, the inductor L stores some energy. Therefore, in the case that the first switch Q1 is turned on, the inductor L is being charged.

In a case that the first switch Q1 is turned off, due to the current retention characteristic of the inductor L, the current through the inductor L continues to flow in a same direction. Since the first switch Q1 is turned off, the current flows through the first diode D1 to the first electrode of the capacitor C. The current through the inductor L changes from gradually increasing during energy storage to gradually decreasing during energy release. When the current through the inductor L changes from increasing to decreasing, the voltage polarity across the inductor L reverses, and the voltage across the inductor L is superimposed with the voltage received from the first power module 11, thereby implement a voltage boost function.

For example, the duty cycle of the PWM signal can be adjusted to control the ratio of the on-time and off-time of the first switch Q1, thereby adjusting the boost multiplier of the voltage received from the first power module 11. The duty cycle of the PWM signal can be adjusted according to the voltage requirement of the electric module 20. Different duty cycles of the PWM signal can also be understood as different refresh frequencies of the PWM signal.

For example, a BOOST driver chip can be used to output the PWM signal to control the first switch Q1 to turn on or off. This application does not limit the specific structure of the BOOST driver chip.

In some optional embodiments, as shown in FIG. 5, the power supply control circuit 10 may further include a voltage detection module 14, where the voltage detection module 14 is connected to the first power module 11 and the switch module 13, and the voltage detection module 14 is configured to: detect the voltage of the first power module 11, and in a case that the voltage of the first power module 11 is greater than or equal to the threshold voltage, control the switch module 13 to turn off; or in a case that the voltage of the first power module 11 is less than the threshold voltage, control the switch module 13 to turn on.

In the embodiments of this application, the voltage detection module 14 is arranged to detect the voltage of the first power module 11, thereby determining whether the first power module 11 experiences abnormalities such as disconnection or voltage drop, so as to accurately control the state of the switch module 13.

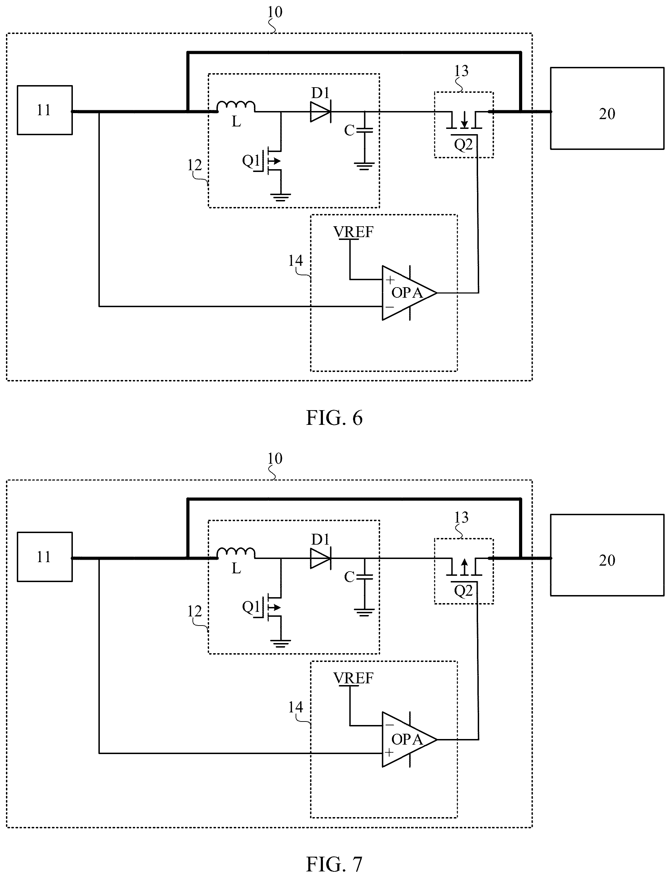

In some optional embodiments, as shown in FIG. 6 or FIG. 7, the voltage detection module 14 includes a comparator OPA, where a first input terminal of the comparator OPA is connected to the first power module 11, a second input terminal of the comparator QPA is connected to a reference power source VREF, and an output terminal of the comparator OPA is connected to a control terminal of the switch module 13. The comparator OPA is configured to: in a case that a voltage at the first input terminal is less than a voltage at the second input terminal, control the switch module 13 to turn on; and in a case that the voltage at the first input terminal is greater than or equal to the voltage at the second input terminal, control the switch module 13 to turn off. The comparator has a relatively simple structure, making it easy and convenient to match the voltage of the first power module 11 with the state of the switch module 13.

It can be understood that since the first input terminal of the comparator OPA is connected to the first power module 11, the voltage at the first input terminal is positively correlated with the voltage of the first power module 11. A smaller voltage of the first power module 11 means a smaller voltage at the first input terminal, and vice versa, a larger voltage of the first power module 11 means a larger voltage at the first input terminal.

The voltage of the reference power source VREF is a fixed voltage.

In an example, as shown in FIG. 6, the comparator OPA may be an inverting comparator. The switch module 13 may turn on at a high level and turn off at a low level. The first input terminal may be an inverting input terminal - of the comparator OPA, and the second input terminal may be a non-inverting input terminal + of the comparator OPA. In a case that the voltage at the first input terminal (that is, the inverting input terminal -) is less than the voltage at the second input terminal (that is, the non-inverting input terminal +), the comparator OPA may output a high level, thereby controlling the switch module 13 to turn on. In a case that the voltage at the first input terminal (that is, the inverting input terminal -) is greater than or equal to the voltage at the second input terminal (that is, the non-inverting input terminal +), the comparator OPA may output a low level, thereby controlling the switch module 13 to turn off.

In another example, as shown in FIG. 7, the comparator OPA may be a non-inverting comparator. The switch module 13 may turn on at a low level and turn off at a high level. The first input terminal is a non-inverting input terminal + of the comparator OPA, and the second input terminal is an inverting input terminal - of the comparator OPA. In a case that the voltage at the first input terminal (that is, the non-inverting input terminal +) is less than the voltage at the second input terminal (that is, the inverting input terminal -), the comparator OPA may output a low level, thereby controlling the switch module 13 to turn on. In a case that the voltage at the first input terminal (that is, the non-inverting input terminal +) is greater than or equal to the voltage at the second input terminal (that is, the inverting input terminal -), the comparator OPA may output a high level, thereby controlling the switch module 13 to turn off.

For example, the switch module 13 may include a second switch Q2. The second switch Q2 may include a transistor. In a case that the comparator OPA is an inverting comparator, the second switch Q2 may be an N-type transistor; and in a case that the comparator OPA is a non-inverting comparator, the second switch Q2 may be a P-type transistor.

Certainly, in other examples, the second switch Q2 may alternatively be a triode, a relay, or the like.

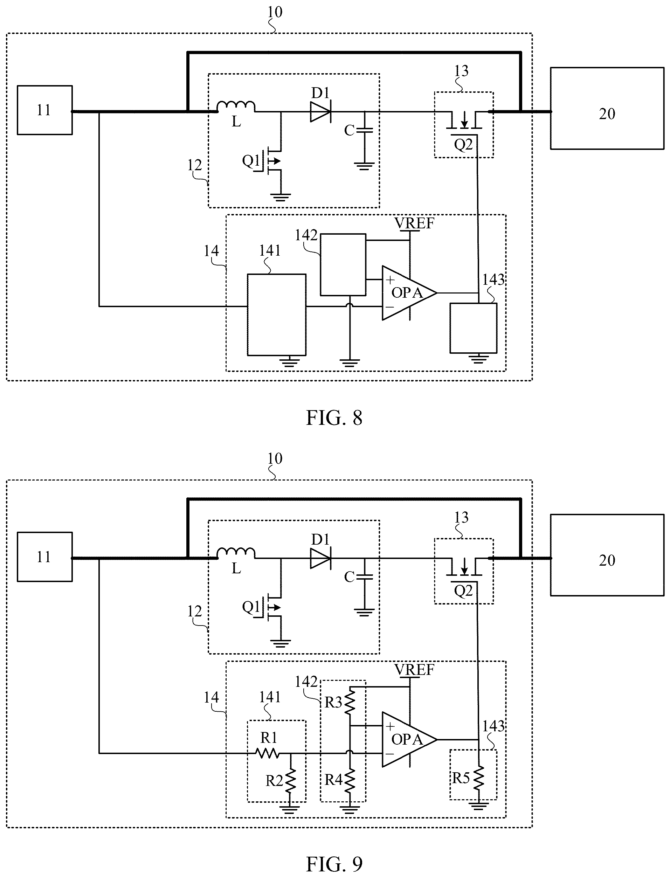

In some optional embodiments, as shown in FIG. 8, the voltage detection module 14 may further include a first voltage divider submodule 141, where a first terminal of the first voltage divider submodule 141 is connected to the first power module 11, a second terminal of the first voltage divider submodule 141 is grounded, a third terminal of the first voltage divider submodule 141 is connected to the first input terminal of the comparator OPA, and a voltage at the third terminal of the first voltage divider submodule 141 is between a voltage at the first terminal of the first voltage divider submodule 141 and a voltage at the second terminal of the first voltage divider submodule 141; and/or a second voltage divider submodule 142, where a first terminal of the second voltage divider submodule 142 is connected to the reference power source VREF, a second terminal of the second voltage divider submodule 142 is grounded, a third terminal of the second voltage divider submodule 142 is connected to the second input terminal of the comparator OPA, and a voltage at the third terminal of the second voltage divider submodule 142 is between a voltage at the first terminal of the second voltage divider submodule 142 and a voltage at the second terminal of the second voltage divider submodule 142; and/or, an initialization submodule 143, where the initialization submodule 143 is connected to the output terminal of the comparator OPA and the control terminal of the switch module 13, and the initialization submodule 143 is configured to initialize a voltage at the control terminal of the switch module 13.

In the embodiments of this application, the first voltage divider submodule 141 may divide the voltage of the first power module 11, and/or the second voltage divider submodule 142 may divide the voltage of the reference power source VREF, thereby ensuring the normal operation of the comparator OPA in a case that the voltage of the first power module 11 and/or the reference power source VREF is relatively high. The initialization submodule 143 may be configured to initialize the potential at the control terminal of the switch module 13, thereby implementing stable control of the state of the switch module 13 and further improving circuit reliability.

It should be noted that FIG. 8 uses the comparator OPA being an inverting comparator as an example, which is not intended to limit this application. For example, in a case that the comparator OPA is an inverting comparator, the voltage of the reference power source VREF may be 5 V.

In some optional embodiments, as shown in FIG. 9, the first voltage divider submodule 141 may include a first resistor R1 and a second resistor R2, where a first terminal of the first resistor R1 is connected to the first power module 11, a second terminal of the first resistor R2 is connected to a first terminal of the second resistor R2 and the first input terminal of the comparator OPA, and a second terminal of the second resistor R2 is grounded; and/or the second voltage divider submodule 142 may include a third resistor R3 and a fourth resistor R4, where a first terminal of the third resistor R3 is connected to the reference power source VREF, a second terminal of the third resistor R3 is connected to a first terminal of the fourth resistor R4 and the second input terminal of the comparator OPA, and a second terminal of the fourth resistor R4 is grounded; and/or the initialization submodule 143 includes a fifth resistor R5, where a first terminal of the fifth resistor R5 is connected to the output terminal of the comparator OPA and the control terminal of the switch module 13, and a second terminal of the fifth resistor R5 is grounded.

In the embodiments of this application, the voltage divider submodule includes resistors connected in series for voltage division, and the initialization submodule includes a grounded resistor, implementing voltage division and initialization with a relatively simple structure.

The second terminal of the first resistor R2 is connected to the first terminal of the second resistor R2, and the third terminal of the first voltage divider submodule 141 may be any node between the second terminal of the first resistor R2 and the first terminal of the second resistor R2. The second terminal of the third resistor R3 is connected to the first terminal of the fourth resistor R4, and the third terminal of the second voltage divider submodule 142 may be any node between the second terminal of the third resistor R3 and the first terminal of the fourth resistor R4.

It can be understood that through setting of the resistance ratio of the first resistor R1, the second resistor R2, the third resistor R3, and the fourth resistor R4, it is possible to detect whether the voltage of the first power module 11 is less than the threshold voltage. As described above, the threshold voltage can be set according to actual needs, so the resistance values of the first resistor R1, the second resistor R2, the third resistor R3, and the fourth resistor R4 can also be set according to actual needs, which is not limited in this application.

It should be noted that FIG. 9 also uses the comparator OPA being an inverting comparator as an example, which is not intended to limit this application. For example, in a case that the comparator OPA is an inverting comparator, the reference power source VREF may also serve as the operating power source for the comparator OPA.

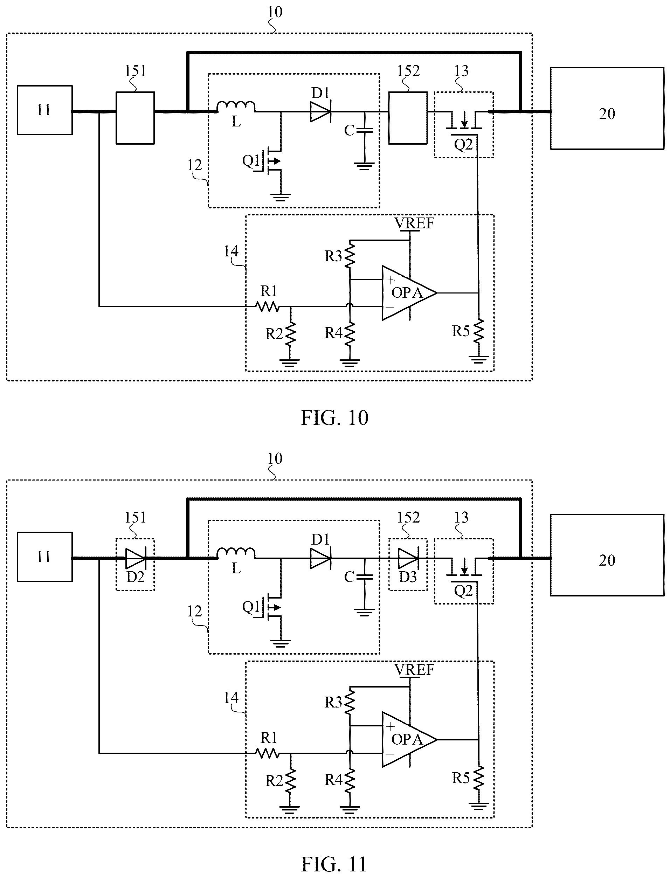

In some optional embodiments, as shown in FIG. 10, the power supply control circuit 10 may further include a first unidirectional conduction module 151, where the first power module 11 is connected to the electric module 20 through the first unidirectional conduction module 151; and/or a second unidirectional conduction module 152, where the second power module 12 is connected to the electric module 20 through the second unidirectional conduction module 152.

It can be understood that the unidirectional conduction module has a unidirectional conduction characteristic, where the first unidirectional conduction module 151 allows an electrical signal to flow from the first power module 11 to the electric module 20, and the second unidirectional conduction module 152 allows an electrical signal to flow from the second power module 12 to the electric module 20. The electrical signal may include a current signal.

In the embodiments of this application, the first unidirectional conduction module 151 may be configured to prevent the electrical signal of the electric module 20 from flowing back to the first power module 11, thereby improving the stability of the first power module 11; and the second unidirectional conduction module 152 may be configured to prevent the electrical signal of the electric module 20 from flowing back to the second power module 12, thereby improving the stability of the second power module 12.

It can be understood that the second unidirectional conduction module 152 is connected to the output terminal of the second power module 12, so the second unidirectional conduction module 152 may also be configured to prevent the electrical signal of the first power module 11 from flowing back to the second power module 12 from the output terminal of the second power module 12.

In some optional embodiments, as shown in FIG. 11, the first unidirectional conduction module 151 may include a second diode D2, where a positive electrode of the second diode D2 is connected to the first power module 11, and a negative electrode of the second diode D2 is connected to the electric module 20; and/or the second unidirectional conduction module 152 may include a third diode D3, where a positive electrode of the third diode D3 is connected to the second power module 12, and a negative electrode of the third diode D3 is connected to the switch module 13.

A diode has a unidirectional conduction characteristic. The second diode D2 is utilized to implement unidirectional conduction between the first power module 11 and the electric module 20, and the third diode D3 is utilized to implement unidirectional conduction between the second power module 12 and the electric module 20, resulting in a simple structure and low costs.

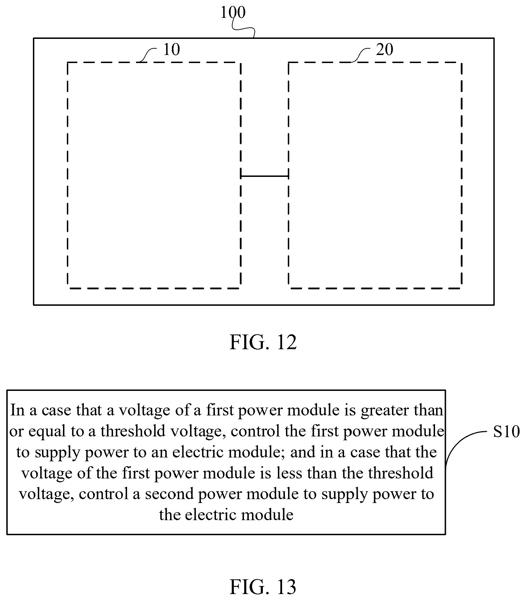

Based on the same inventive concept, this application further provides an apparatus. As shown in FIG. 12, the apparatus 100 includes an electric module 20 and a power supply control circuit 10, where the power supply control circuit 10 is the power supply control circuit 10 in any one of the above embodiments. It can be understood that the apparatus has the beneficial effects of the power supply control circuit provided in the embodiments of this application, and for details, reference can be made to the specific description of the power supply control circuit in the above embodiments, which are not repeated herein.

It should be noted that in the foregoing embodiments shown in the figures, the resistor is presented as a single resistor, and the capacitor is presented as a single capacitor. In other embodiments, the resistor may alternatively be an integration of series, parallel, or hybrid resistors, and the capacitor may also be an integration of capacitors connected in series, parallel, or series-parallel. The specific parameters of each component can be set according to actual needs, which is not limited in this application.

Based on the same inventive concept, this application further provides a power supply control method. As shown in FIG. 13, the power supply control method may include S10.

In a case that a voltage of a first power module is greater than or equal to a threshold voltage, control the first power module to supply power to an electric module; and in a case that the voltage of the first power module is less than the threshold voltage, control a second power module to supply power to the electric module.

In the embodiments of this application, in a case that the voltage of the first power module is less than the threshold voltage, the second power module can be activated to supply power to the electric module. This ensures that the electric module continues to operate in the event of a disconnection or voltage drop of the first power module, thereby improving power supply reliability.

The power supply control method provided in the embodiment of this application can be used to control the power supply control circuit in any one of the above embodiments. It can be understood that the power supply control method has the beneficial effects of the power supply control circuit provided in the embodiments of this application, and for details, reference can be made to the specific description of the power supply control circuit in the above embodiments, which are not repeated herein.

In some embodiments, the second power module is connected to the electric module through a switch module. S10 may include: in a case that the voltage of the first power module is greater than or equal to the threshold voltage, controlling the switch module to turn off to control the first power module to supply power to the electric module; and in a case that the voltage of the first power module is less than the threshold voltage, controlling the switch module to turn on to control the second power module to supply power to the electric module.

In some embodiments, the second power module is connected to the first power module, and the method provided in the embodiments of this application may further include: controlling the second power module to receive and store electric energy from the first power module.

In some embodiments, the second power module includes an energy storage control submodule and an energy storage submodule, where the energy storage control submodule is connected to the first power module and the energy storage submodule, and the energy storage submodule is connected to the switch module.

The step of controlling the second power module to receive and store electric energy from the first power module may include:
using the energy storage control submodule to control the energy storage submodule to receive and store electric energy from the first power module; and in a case that the switch module is turned off, controlling the energy storage submodule to store electric energy, and in a case that the switch module is turned on, controlling the energy storage submodule to release electric energy to the electric module.

For the structures of the energy storage control submodule and the energy storage submodule, reference may be made to the specific description of the energy storage control submodule and the energy storage submodule in the power supply control circuit in the above embodiments. Details are not repeated herein.

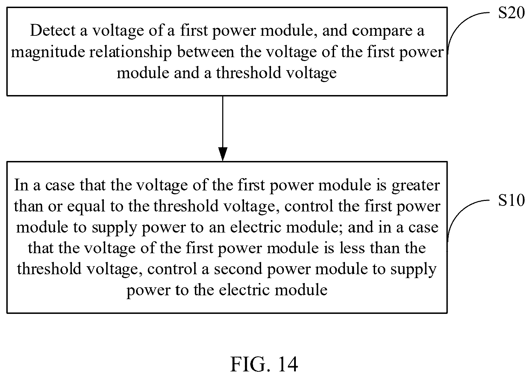

In some embodiments, as shown in FIG. 14, before S10, the power supply control method provided in the embodiments of this application may further include S20.

S20: Detect the voltage of the first power module, and compare a magnitude relationship between the voltage of the first power module and the threshold voltage.

In the embodiments of this application, the voltage of the first power module is detected, so as to determine whether the first power module experiences abnormalities such as disconnection or voltage drop, thereby accurately controlling the power supply state of the two power sources.

For example, the above step S20 may be performed by the voltage detection module 14 in the power supply control circuit in the above embodiments. In some embodiments, S20 may include: using a comparator to detect the voltage of the first power module, where a first input terminal of the comparator is connected to the first power module, and a second input terminal of the comparator is connected to a reference power source; in a case that a voltage at the first input terminal is less than a voltage at the second input terminal, determining that the voltage of the first power module is less than the threshold voltage; and in a case that the voltage at the first input terminal is greater than or equal to the voltage at the second input terminal, determining that the voltage of the first power module is greater than or equal to the threshold voltage.

In some embodiments, the second power module is connected to the electric module through a switch module, and an output terminal of the comparator is connected to a control terminal of the switch module.

In some embodiments, the first input terminal is an inverting input terminal of the comparator, and the second input terminal is a non-inverting input terminal of the comparator; or the first input terminal is a non-inverting input terminal of the comparator, and the second input terminal is an inverting input terminal of the comparator.

It should be noted that in the absence of conflict, the embodiments and features in the embodiments of this application can be combined with each other.

Although this application has been described with reference to preferred embodiments, various improvements can be made thereto and components therein can be replaced with equivalents without departing from the scope of this application. In particular, as long as there is no structural conflict, the technical features mentioned in the various embodiments can be combined in any manner. This application is not limited to the specific embodiments disclosed herein but includes all technical solutions falling within the scope of the claims.

## Claims

1. A power supply control circuit, comprising a first power module, a second power module, and a switch module; wherein
the first power module is connected to an electric module;
the second power module is connected to the electric module through the switch module;
in a case that a voltage of the first power module is greater than or equal to a threshold voltage, the switch module is turned off, and the first power module is configured to supply power to the electric module; and
in a case that the voltage of the first power module is less than the threshold voltage, the switch module is turned on, and the second power module is configured to supply power to the electric module.

2. The power supply control circuit according to claim 1, wherein the second power module is connected to the first power module, and the second power module is further configured to receive and store electric energy from the first power module.

3. The power supply control circuit according to claim 1 or 2, wherein the second power module comprises an energy storage control submodule and an energy storage submodule, wherein the energy storage control submodule is connected to the first power module and the energy storage submodule, and the energy storage submodule is connected to the switch module;
the energy storage control submodule is configured to control the energy storage submodule to receive and store electric energy from the first power module; and
the energy storage submodule is configured to store electric energy in a case that the switch module is turned off, and release electric energy to the electric module in a case that the switch module is turned on.

4. The power supply control circuit according to claim 3, wherein the energy storage control submodule comprises an inductor, a first switch, and a first diode, and the energy storage submodule comprises a capacitor;
a first terminal of the inductor is connected to the first power module, and a second terminal of the inductor is connected to a first terminal of the first switch and a positive electrode of the first diode;
a second terminal of the first switch is grounded, and a control terminal of the first switch receives a pulse width modulation signal;
a negative electrode of the first diode is connected to a first electrode of the capacitor; and
the first electrode of the capacitor is connected to the switch module, and a second electrode of the capacitor is grounded.

5. The power supply control circuit according to any one of claims 1 to 4, wherein the power supply control circuit further comprises a voltage detection module, wherein the voltage detection module is connected to the first power module and the switch module, and the voltage detection module is configured to: detect a voltage of the first power module, and in a case that the voltage of the first power module is greater than or equal to the threshold voltage, control the switch module to turn off; or in a case that the voltage of the first power module is less than the threshold voltage, control the switch module to turn on.

6. The power supply control circuit according to claim 5, wherein the voltage detection module comprises a comparator, wherein a first input terminal of the comparator is connected to the first power module, a second input terminal of the comparator is connected to a reference power source, and an output terminal of the comparator is connected to a control terminal of the switch module; and
the comparator is configured to: in a case that a voltage at the first input terminal is less than a voltage at the second input terminal, control the switch module to turn on; and in a case that the voltage at the first input terminal is greater than or equal to the voltage at the second input terminal, control the switch module to turn off.

7. The power supply control circuit according to claim 6, wherein the first input terminal is an inverting input terminal of the comparator, and the second input terminal is a non-inverting input terminal of the comparator;
or the first input terminal is a non-inverting input terminal of the comparator, and the second input terminal is an inverting input terminal of the comparator.

8. The power supply control circuit according to claim 6 or 7, wherein the voltage detection module further comprises:
a first voltage divider submodule, wherein a first terminal of the first voltage divider submodule is connected to the first power module, a second terminal of the first voltage divider submodule is grounded, a third terminal of the first voltage divider submodule is connected to the first input terminal, and a voltage at the third terminal of the first voltage divider submodule is between a voltage at the first terminal of the first voltage divider submodule and a voltage at the second terminal of the first voltage divider submodule.

9. The power supply control circuit according to claim 6 or 7, wherein the voltage detection module further comprises:
a second voltage divider submodule, wherein a first terminal of the second voltage divider submodule is connected to the reference power source, a second terminal of the second voltage divider submodule is grounded, a third terminal of the second voltage divider submodule is connected to the second input terminal, and a voltage at the third terminal of the second voltage divider submodule is between a voltage at the first terminal of the second voltage divider submodule and a voltage at the second terminal of the second voltage divider submodule.

10. The power supply control circuit according to claim 6 or 7, wherein the voltage detection module further comprises:
an initialization submodule, wherein the initialization submodule is connected to the output terminal of the comparator and the control terminal of the switch module, and the initialization submodule is configured to initialize a voltage at the control terminal of the switch module.

11. The power supply control circuit according to claim 8, wherein the first voltage divider submodule comprises a first resistor and a second resistor, wherein a first terminal of the first resistor is connected to the first power module, a second terminal of the first resistor is connected to a first terminal of the second resistor and the first input terminal, and a second terminal of the second resistor is grounded.

12. The power supply control circuit according to claim 9, wherein the second voltage divider submodule comprises a third resistor and a fourth resistor, wherein a first terminal of the third resistor is connected to the reference power source, a second terminal of the third resistor is connected to a first terminal of the fourth resistor and the second input terminal, and a second terminal of the fourth resistor is grounded.

13. The power supply control circuit according to claim 10, wherein the initialization submodule comprises a fifth resistor, wherein a first terminal of the fifth resistor is connected to the output terminal of the comparator and the control terminal of the switch module, and a second terminal of the fifth resistor is grounded.

14. The power supply control circuit according to any one of claims 1 to 13, wherein the power supply control circuit further comprises:
a first unidirectional conduction module, wherein the first power module is connected to the electric module through the first unidirectional conduction module;
and/or a second unidirectional conduction module, wherein the second power module is connected to the electric module through the second unidirectional conduction module.

15. An apparatus, comprising:
an electric module; and
the power supply control circuit according to any one of claims 1 to 11.

16. A power supply control method, comprising:
in a case that a voltage of a first power module is greater than or equal to a threshold voltage, controlling the first power module to supply power to an electric module; and
in a case that the voltage of the first power module is less than the threshold voltage, controlling a second power module to supply power to the electric module.

17. The method according to claim 16, wherein the method further comprises:
detecting the voltage of the first power module, and comparing magnitude relationship between the voltage of the first power module and the threshold voltage.
